# EUROPÄISCHE PATENTSCHRIFT

(11) **EP 2 588 723 B1**
(45) Veröffentlichungstag und Bekanntmachung des Hinweises auf die Patenterteilung: **12.08.2015**
(21) Anmeldenummer: 11727499.3
(22) Anmeldetag: 28.06.2011
(51) Int. Cl.: F01N 3/10, F01N 3/20

(54) **ABGASBEHANDLUNGSVORRICHTUNG**
EXHAUST-GAS TREATMENT DEVICE
DISPOSITIF DE TRAITEMENT DE GAZ D'ÉCHAPPEMENT

(30) Priorität: 02.07.2010 DE 102010025880
(43) Veröffentlichungstag der Anmeldung: 08.05.2013
(73) Patentinhaber: Emitec Gesellschaft für Emissionstechnologie mbH, 53797 Lohmar (DE); VOLKSWAGEN AG, 38440 Wolfsburg (DE)
(72) Erfinder: KRUSE, Carsten, 53842 Troisdorf (DE); NAGEL, Thomas, 51766 Engelskirchen (DE); SPRUTE, Jörg, 29399 Wahrenholz (DE)
(74) Vertreter: Rössler, Matthias
(86) Internationale Anmeldenummer: PCT/EP2011/060809
(87) Internationale Veröffentlichungsnummer: WO 2012/000989

(56) Entgegenhaltungen:
- EP-A1- 1 748 162
- WO-A1-03/004839
- DE-A1-102006 051 788
- DE-A1-102008 048 806

## Beschreibung

Die Erfindung betrifft eine Abgasbehandlungsvorrichtung aufweisend eine Zugabevorrichtung für ein Reduktionsmittel. Derartige Abgasbehandlungsvorrichtungen mit einer Zugabevorrichtung sind in letzter Zeit vermehrt zur Reinigung der Abgase von (mobilen) Verbrennungskraftmaschinen in Kraftfahrzeugen zum Einsatz gekommen.

Durch die Zugabe eines Reduktionsmittels zu dem Abgas einer Verbrennungskraftmaschine in einer Abgasbehandlungsvorrichtung kann häufig eine besonders gründliche und effektive Reinigung der Abgase erfolgen. Ein Verfahren, bei dem eine derartige Zugabe von Reduktionsmittel zum Einsatz kommt, ist beispielsweise die selektive katalytische Reduktion [SCR = selective catalytic reduction], bei welcher Stickoxidverbindungen im Abgas reduziert werden. Das Verfahren der selektiven katalytischen Reduktion ist insbesondere bei mager betriebenen Verbrennungskraftmaschinen sinnvoll, bei denen für die Verbrennung ein Luftüberschuss gegenüber einem stöchiometrischen Kraftstoff-Luft-Gemisch vorliegt. Die Abgase derartiger Verbrennungskraftmaschinen weisen einen besonders hohen Anteil an Stickoxidverbindungen auf. Im Rahmen des Verfahrens der selektiven katalytischen Reduktion können Stickstoffoxidanteile im Abgas beispielsweise mit Hilfe von Ammoniak als Reduktionsmittel reduziert werden. Bei ausreichenden Temperaturen werden Stickstoffoxidverbindungen zusammen mit Ammoniak zu unschädlichen Bestandteilen, wie Wasser und Stickstoff, reduziert.

Zur Bereitstellung von Ammoniak in einem Abgassystem wird dieser in einem Kraftfahrzeug normalerweise nicht direkt bevorratet, sondern in Form eines Vorläufers in einem Tank gespeichert. Man spricht von einem Reduktionsmittelvorläufer oder einer Reduktionsmittelvorläuferlösung. Eine derartige Reduktionsmittelvorläuferlösung, aus der Ammoniak gewonnen werden kann, ist beispielsweise eine Harnstoff-Wasser-Lösung. Zum Einsatz kommt im Kraftfahrzeugbereich z. B. eine 32,5% Harnstoff-Wasser-Lösung, die unter dem Handelsnamen AdBlue erhältlich ist. Die Umsetzung eines derartigen Reduktionsmittelvorläufers zu Reduktionsmittel kann beispielsweise thermisch und/oder unter Zuhilfenahme eines Katalysators innerhalb eines Abgasstromes im Abgassystem oder in einem abgasexternen Reaktor erfolgen.

Zur Zugabe von Reduktionsmittel zu einem Abgassystem wird dieses auch flüssig in die Abgasbehandlungsvorrichtung eingedüst. Durch die Abgaswärme verdampft das Reduktionsmittel und wird gleichzeitig umgesetzt. Damit dies effektiv und zuverlässig geschieht, ist es erforderlich, dass das Reduktionsmittel in möglichst feinen Tropfen bzw. in möglichst feiner Verteilung in dem Abgasstrom vorliegt. Es ist regelmäßig problematisch, dass große Reduktionsmitteltropfen nicht ausreichend schnell verdampfen.

Darüber hinaus sollte sichergestellt sein, dass das eingedüste Reduktionsmittel nicht auf kalte Oberflächen der Abgasbehandlungsvorrichtung trifft. Ein weiteres häufig auftretendes Problem ist, dass Reduktionsmittel auf derartigen kalten Oberflächen kondensiert und unter Umständen unerwünschte Ablagerungen bildet.

Aus dem Stand der Technik ist beispielsweise die WO 2009/127449 A1 bekannt, welche ein in der Abgasleitung angeordnetes Fangmedium offenbart, auf welchem eingedüstes Reduktionsmittel verweilt und vollständig verdampft wird. Dieses Fangmedium ist von der kalten Außenwand einer Abgasleitung thermisch isoliert. Dabei ist das Fangmedium nur mit erheblichen technischen Aufwand zu montieren und in einem nicht unbeachtlichem Maße Schwingungen ausgesetzt.

EP 1 748 162 A1 offenbart eine Abgasreinigungskomponente, an deren Abströmseite sich eine (zusätzliche) Struktur von frei tragenden Lochblechplatten befindet, auf welche Reduktionsmittel auftrifft.

DE 10 2008 048 806 A1 offenbart eine Anordnung zur Reinigung von Abgasen, bei welcher ein Reduktionsmittel auf die Rückwärtige Stirnseite einer Abgasbehandlungseinrichtung zugegeben wird.

Ausgehend von diesem Stand der Technik ist es Aufgabe der hier vorliegenden Erfindung, eine verbesserte Abgasbehandlungsvorrichtung mit einer Zugabevorrichtung für ein Reduktionsmittel anzugeben. Die aus dem Stand der Technik aufgezeigten Probleme sollen dabei zumindest teilweise gelindert werden.

Diese Aufgaben werden gelöst mit einer Abgasbehandlungsvorrichtung gemäß den Merkmalen des Patentanspruches 1. Weitere vorteilhafte Ausgestaltungen der Abgasbehandlungsvorrichtung sind in den abhängig formulierten Patentansprüchen angegeben. Die in den Patentansprüchen einzeln aufgeführten Merkmale sind in beliebiger, technologisch sinnvoller, Weise miteinander kombinierbar und können durch erläuternde Sachverhalte aus der Beschreibung ergänzt werden, wobei weitere Ausführungsvarianten der Erfindung aufgezeigt werden.

Die Erfindung betrifft eine Abgasbehandlungsvorrichtung aufweisend eine Abgasbehandlungskomponente, die mit einer Strömungsrichtung von einer Anströmseite zu einer Abströmseite durchströmbar ist, wobei in Strömungsrichtung hinter der Abgasbehandlungskomponente eine Zugabevorrichtung für ein Reduktionsmittel in die Abgasbehandlungsvorrichtung vorgesehen ist, wobei die Zugabevorrichtung eine Zugaberichtung aufweist, die zumindest teilweise entgegengesetzt zur Strömungsrichtung verläuft, dadurch gekennzeichnet, dass die Abströmseite der Abgasbehandlungskomponente zumindest teilweise von einer porösen Lage überspannt ist und zwischen der Zugabevorrichtung und der Abgasbehandlungskomponente ein Abstand vorliegt, der derart gewählt ist, dass eingedüstes Reduktionsmittel die poröse Lage erreicht, wobei die poröse Lage ein metallisches Gewebe oder ein metallisches Vlies umfasst.

Eine Abgasbehandlungskomponente kann beispielsweise ein Oxidationskatalysator oder ein Partikelfilter sein. Dieser kann mit einer metallischen Trägerstruktur hergestellt sein, welche aus zumindest einer wenigstens teilweise strukturierten Lage, insbesondere aus gewellten und glatten metallischen Lagen, gewickelt, gewunden oder gestapelt sein kann. Die Abgasreinigungskomponente kann auch ein keramischer, insbesondere extrudierter, Träger sein.

Die Abgasreinigungskomponente weist vorzugsweise eine Vielzahl sich von der Anströmseite zu der Abströmseite erstreckende Kanäle auf, die durch Kanalwände voneinander abgetrennt sind. Die Kanalwände können bereichsweise Unterbrechungen haben, so dass innerhalb der Abgasbehandlungskomponente eine Durchmischung von Abgas, welches durch verschiedene Kanäle strömt, möglich ist. Die Abgasreinigungskomponente ist bevorzugt als Monolith und/oder als Wabenkörper ausgeführt.

Die Strömungsrichtung durch die Abgasbehandlungsvorrichtung verläuft ausgehend von einer Verbrennungskraftmaschine durch ein vollständiges Abgasbehandlungssystem mit der erfindungsgemäßen Abgasbehandlungsvorrichtung zu einem Auslass des Abgassystems.

Die Zugabevorrichtung kann beispielsweise ein Injektor zur Eindüsung des Reduktionsmittels sein. Ein derartiger Injektor sprüht unter Druck stehendes, vorzugsweise flüssiges, Reduktionsmittel in die Abgasbehandlungsvorrichtung ein. Die Zugabevorrichtung (mit anderen Worten die Strahlrichtung, mit der das Reduktionsmittel zugegeben wird) ist dabei so ausgelegt, dass eine möglichst feine Verteilung des Reduktionsmittels in der Abgasbehandlungsvorrichtung gewährleistet ist. Die einzelnen von der Zugabevorrichtung erzeugten Reduktionsmitteltropfen sind möglichst klein. Vorzugsweise haben die von der Zugabevorrichtung erzeugten Reduktionsmitteltropfen einen mittleren Durchmesser von weniger als 200 µm, vorzugsweise weniger als 100 µm. Damit aber gerade auch bei starken Abgasströmungen eine gezielte Zugabe der Reduktionsmitteltropfen hin zur porösen Lage gewährleistet ist, ist weiter bevorzugt, den mittleren Durchmesser nicht kleiner als 50 µm zu wählen.

Die Abströmseite der Abgasbehandlungskomponente ist zumindest teilweise von einer porösen Lage überspannt. Damit ist insbesondere gemeint, dass die poröse Lage die Abströmseite zumindest teilweise abdeckt. Aus der Abgasbehandlungskomponente austretende Abgase müssen demnach zumindest teilweise die poröse Lage passieren, um in Strömungsrichtung weiter in der Abgasbehandlungsvorrichtung zu strömen. Die Abströmseite ist in einer bevorzugten Ausführungsvariante der erfindungsgemäßen Vorrichtung von der porösen Lage vollständig überspannt bzw. bedeckt. Dann muss das Abgas, welches die Abgasbehandlungskomponente durchströmt, auch die poröse Lage vollständig passieren.

Gegebenenfalls kann die poröse Lage auch als Lagenverbund ausgeführt sein, also z. B. mehrere, insbesondere miteinander verbundene, Lagen umfassen. Dabei können die Lagen verschieden ausgeführt sein, z. B. hinsichtlich ihrer Porosität und/oder Formsteifigkeit. Auch wenn bevorzugt ist, dass sich alle Lagen (vollständig) überdecken, kann der Lagenverbund auch dadurch gebildet sein, dass wenigstens ein Teilabschnitt des Lagenverbundes gegenüber einem anderen Teilabschnitt mehrere Lagen bzw. Schichten aufweist.

Der Abstand zwischen der Abgasbehandlungskomponente und der Zugabevorrichtung ist so gewählt, dass das zugegebene Reduktionsmittel im Betrieb der Abgasbehandlungsvorrichtung die poröse Lage erreicht. Vorzugsweise erreicht das eingedüste Reduktionsmittel die poröse Lage vollständig. Der Abstand hängt demnach von der Abgasströmungsgeschwindigkeit und der Geschwindigkeit des eingedüsten Reduktionsmittels bzw. den Eigenschaften des Abgases und des eingedüsten Reduktionsmittels ab. Bei einer geringen Abgasströmungsgeschwindigkeit kann der Abstand demnach vergrößert sein und umgekehrt - eine Auslegung, die der Fachmann anhand einfacher Versuche anhand der üblichen Abgastests für Kraftfahrzeuge ohne weiteres vornehmen kann. Eine Eigenschaft des eingedüsten Reduktionsmittels, die für den überbrückbaren Abstand wichtig ist, ist die Größe der zugeführten Reduktionsmitteltropfen. Kleine Tropfen werden durch Reibung in der Abgasströmung schnell abgebremst und können sich nur kurze Strecken bzw. Abstände entgegen der Strömungsrichtung der Abgase bewegen. Größere Tropfen werden aufgrund ihrer Massenträgheit langsamer abgebremst und können sich daher längere Strecken bzw. Abstände entgegen der Strömungsrichtung der Abgase bewegen. Der Abstand beträgt vorzugsweise weniger als 50 mm, insbesondere weniger als 30 mm und besonders bevorzugt weniger als 20 mm. Damit kann insbesondere erreicht werden, dass das Reduktionsmittel in ein laminares Strömungsprofil des Abgases nach dem Austritt aus der Abgasreinigungskomponente zugegeben wird.

Durch die erfindungsgemäße Vorrichtung ist es möglich, in einer für die gerichtete Zugabe geeigneten Zone der Abgasbehandlungsvorrichtung Reduktionsmittel für den Kontakt mit dem Abgas zu bevorraten. Weiterhin ist so eine konkrete Applikation des Reduktionsmittels zu der Abgasströmung möglich, z. B. mittels angepasster Mengen des Reduktionsmittels in Abhängigkeit zur räumlichen Verteilung des durchströmenden Abgases (Abgasmassenstrom und/oder Abgastemperatur, etc.). Folglich kann durch eine konkrete Zuordnung von die Abgasbehandlungskomponente verlassende (lokale) Teilabgasströme zu der porösen Lage die Möglichkeit eröffnet werden, sparsamer Reduktionsmittel zuzugeben, weil es effektiver und gezielter umgesetzt wird.

In einer weiteren vorteilhaften Ausgestaltung der erfindungsgemäßen Abgasbehandlungsvorrichtung ist die poröse Lage zumindest teilweise parallel zur Abströmseite angeordnet. Eine (insbesondere vollständig) parallele Anordnung der porösen Lage zur Abströmseite ermöglicht eine besonders platzsparende und einfache Platzierung der porösen Lage an der Abströmseite, insbesondere auch im laminaren Strömungsbereich hinter der Abströmseite. Gleichzeitig ermöglicht eine derartige Anordnung einen schnellen Wärmeübergang von der Abgasbehandlungskomponente zu der porösen Lage. Die (katalytisch aktive) Abgasbehandlungskomponente stellt regelmäßig eine Temperaturquelle dar, welche die poröse Lage (direkt und/oder über die Abgasströmung) aufheizen kann. Hierdurch wird es ermöglicht, dass auf die poröse Lage aufgetroffenes Reduktionsmittel besonders effektiv thermisch umgesetzt wird.

Die poröse Lage umfasst ein metallisches Gewebe oder ein metallisches Vlies.

Ein derartiges Vlies kann mit genau definierten thermischen Eigenschaften und mit einem definierten Durchströmungswiderstand ausgestaltet werden. Der Durchströmungswiderstand und die thermischen Eigenschaften können über eine Wahl des Werkstoffes der einzelnen metallischen Filamente des Vlieses bzw. des Gewebes, über eine Wahl der Dicke der Filamente und/oder über die Dichte und die Dickes des Vlieses bzw. des Gewebes festgelegt werden. Gegebenenfalls kann das Gewebe auch (nur) eine Stützfunktion erfüllen und das Vlies vorrangig das Reduktionsmittel zeitweise einlagern. Das Gewebe (mit regelmäßigem Aufbau von Drahtfilamenten) und das Vlies (mit chaotischem bzw. stochastischem Aufbau mit Drahtfilamenten) können auch gemeinsam zur Ausbildung komplexer Formen der porösen Lage eingesetzt werden.

In einer bevorzugten Ausführungsvariante der erfindungsgemäßen Abgasbehandlungsvorrichtung ist das metallische Vlies elektrisch beheizbar. Der Werkstoff für das Vlies bzw. für das Gewebe ist insbesondere elektrisch leitfähig, so dass über eine geeignete Kontaktierung das Vlies bzw. das Gewebe mit einem elektrischen Strom beheizt werden kann. Die Kontaktierung kann separat oder aber über die Abgasbehandlungskomponente vorgesehen sein.

Weiterhin vorteilhaft ist die erfindungsgemäße Abgasbehandlungsvorrichtung, wenn die poröse Lage zumindest teilweise aus Titandraht gefertigt ist. Auf Titandraht bildet sich in Anwesenheit oxidierender Medien eine Titanoxidschicht. Das Abgas einer Verbrennungskraftmaschine ist ein derartiges oxidierendes Medium. Eine Titanoxidschicht begünstigt die Umsetzung von Reduktionsmittelvorläuferlösung zu Reduktionsmittel bzw. zu Ammoniak. Eine Titanoxidschicht kann bereits vor der Verarbeitung in der porösen Lage auf dem Titandraht erzeugt werden.

Weiterhin vorteilhaft ist die erfindungsgemäße Abgasbehandlungsvorrichtung, wenn die poröse Lage mit einer Stützkonstruktion an der Abgasbehandlungskomponente abgestützt ist. Ganz besonders bevorzugt ist hierbei, dass die poröse Lage nur mit der Abgasbehandlungskomponente in Kontakt ist. Durch eine derartige Stützkonstruktion kann ein definierter Abstand zwischen der Abströmseite der Abgasbehandlungskomponente und der porösen Lage eingestellt werden. Die Stützkonstruktion kann beispielsweise in Form von Stützstiften ausgeführt sein, welche sich teilweise in Kanäle der Abgasbehandlungskomponente hinein erstrecken. Weiterhin kann ein Stützring über den Umfang der Abgasbehandlungskomponente vorgesehen sein, der einen Spannrahmen für die mindestens eine poröse Lage bildet. Eine derartige Stützkonstruktion ist vorzugsweise mit einer definierten Wärmeleitfähigkeit (z. B. aufgrund eines metallischen Werkstoffs) ausgeführt, die thermische Energie von der Abgasbehandlungskomponente in die poröse Lage hinein transportieren kann.

Somit kann die poröse Lage besonders kostengünstig zentral in einer Abgasbehandlungsvorrichtung platziert und gleichzeitig können thermische Brücken zu einer Außenwand einer Abgasleitung vermieden werden. Dadurch, dass die poröse Lage an die Abgasbehandlungskomponente angebunden ist, ist ein Wärmefluss von der porösen Lage zu einer (kälteren) Außenwand oder zu einem Außenrohr der Abgasbehandlungsvorrichtung nicht möglich oder zumindest stark erschwert. Bevorzugt steht die poröse Lage in keinem direkten Kontakt zu einer Außenwand einer Abgasbehandlungsvorrichtung. Außerdem ist die poröse Lage bevorzugt nur an einer Abströmseite einer Abgasbehandlungskomponente befestigt.

Weiterhin vorteilhaft ist die erfindungsgemäße Abgasbehandlungsvorrichtung, wenn die poröse metallische Lage eine von einer Ebene abweichende Form aufweist, die an ein Sprühbild einer Zugabevorrichtung für Reduktionsmittel angepasst ist.

Das Sprühbild einer Zugabevorrichtung wird insbesondere bestimmt durch die Tropfenverteilung, die Zugaberichtung, die Strömungsgeschwindigkeit und/oder die Strömungsrichtung des aus der Zugabevorrichtung austretenden Reduktionsmittels. Mit der Form der porösen Lage ist vor allem die Form der von der porösen Lage gebildeten Fläche gemeint. Diese kann folglich insbesondere auch (teilweise, z. B. konvex und/oder konkav) gekrümmt sein. Zur Anpassung der Form an das Sprühbild kann die Form beispielsweise so gewölbt sein, dass aus der Zugabevorrichtung austretendes Reduktionsmittel unabhängig von der Austrittsrichtung aus der Zugabevorrichtung eine im Wesentlichen gleiche Wegstrecke zu der porösen Lage zurücklegt.

Beispielsweise kann die Form so gewählt sein, dass die Wegstrecke von der Zugabevorrichtung zu der porösen Lage sich im Bereich des Sprühkegels der Zugabevorrichtung bei jeder beliebigen Zugaberichtung um maximal 40 %, vorzugsweise maximal 20 % und besonders bevorzugt maximal 10 % unterscheidet.

Bei der Anpassung der Form an das Sprühbild kann auch die Ablenkung des zugeführten Reduktionsmittels durch die Abgasströmung mit berücksichtigt werden. Beispielsweise kann die Form so gewählt werden, dass bei einer Variation der Abgasgeschwindigkeit zwischen 5 m/sec. und 20 m/sec, in jedem Fall zumindest 60 %, vorzugsweise zumindest 80 %, und besonders bevorzugt zumindest 90 % des Reduktionsmittels auf die poröse Lage treffen. Vorzugsweise ist die Form der porösen Lage hierzu in Richtung zur Zugabevorrichtung gekrümmt gestaltet.

Weiterhin ist bevorzugt, dass die Form der porösen Lage wenigstens eine Vertiefung hin zur Abgasbehandlungskomponente bildet. Mit anderen Worten bedeutet das insbesondere, dass die Form wenigstens eine Vertiefung bildet, so dass ein Teil der porösen Lage eine Art Kragenabschnitt bzw. Erhöhung um den Auftreffbereich des Reduktionsmittels bildet. Der Kragenabschnitt bzw. die Erhöhung kann einen gekrümmten Verlauf auf der porösen Lage ausbilden, vereinfacht ausgedrückt z. B. nach Art eines Hufeisens, eines Tropfens, eines Kreises oder ähnlichem. Regelmäßig ist es sinnvoll, die Anzahl der Vertiefungen an die Anzahl der Zugabevorrichtungen anzupassen, so dass bei der Bereitstellung einer Zugabevorrichtung auch genau eine Vertiefung vorgesehen ist.

Weiterhin ist es vorteilhaft, wenn die Zugabevorrichtung derart angeordnet ist, dass sie außerhalb eines sich in Strömungsrichtung ausgehend von der Abströmseite erstreckenden gedachten Zylinders liegt. Die Zugabevorrichtung ist damit aus der Hauptströmungsrichtung des Abgases durch die Abgasbehandlungsvorrichtung seitlich ausgerückt und stört die Abgasströmung durch die Abgasbehandlungsvorrichtung somit nicht. Durch die poröse Lage an der Abströmseite kann trotzdem eine geeignete Fläche geschaffen werden, auf die das Reduktionsmittel bei der Zugabe in die Abgasbehandlungsvorrichtung trifft, insbesondere wenn die Form der porösen Lage, wie oben ausgeführt, an das Sprühbild der Zugabevorrichtung angepasst ist.

Selbstverständlich ist auch möglich, dass die poröse Lage eine Beschichtung zur Umsetzung des Reduktionsmittels aufweist, z. B. eine Hydrolyse-Beschichtung, für den Fall, dass Harnstoff als Reduktionsmittel eingesetzt wird.

Weiterhin erfindungsgemäß ist ein Kraftfahrzeug aufweisend eine Verbrennungskraftmaschine und eine erfindungsgemäße Abgasbehandlungsvorrichtung zur Reinigung der Abgase der Verbrennungskraftmaschine.

Ebenso ist eine Abgasbehandlungskomponente erfindungsgemäß, die mit wenigstens einer poröse Lage an der Abströmseite ausgeführt ist. Insbesondere ist hierbei eine Abgasbehandlungskomponente gemeint, die mit einer Strömungsrichtung von einer Anströmseite zu einer Abströmseite für ein Abgas durchströmbar ist, wobei die Abströmseite der Abgasbehandlungskomponente zumindest teilweise von einer porösen Lage überspannt ist. Im Hinblick auf die Ausgestaltung der porösen Lage und/oder deren Fixierung an der Abgasbehandlungskomponente wird hier auf die vorstehenden Erläuterungen und bevorzugten Ausgestaltungen vollumfänglich Bezug genommen. Dies betrifft insbesondere die Merkmale zur Form der porösen Lage, die an ein Sprühbild einer Zugabevorrichtung für Reduktionsmittel angepasst ist, und/oder den Aufbau der porösen Lage. Darüber hinaus wird insbesondere auch eine Verwendung einer solchen Abgasbehandlungskomponente als Auffangelement für flüssiges Reduktionsmittel, insbesondere Harnstoff, in einer Abgasbehandlungsvorrichtung, insbesondere eines Kraftfahrzeuges, vorgeschlagen.

Die Erfindung, sowie das technische Umfeld, werden nachfolgend anhand der Figuren näher erläutert, wobei die Figuren besonders bevorzugte Ausführungsbeispiele darstellen, auf die die Erfindung jedoch nicht begrenzt ist. Insbesondere ist darauf hinzuweisen, dass die Figuren und insbesondere die dargestellten Größenverhältnisse nur schematisch sind. Es zeigen:
- Fig. 1:: eine erfindungsgemäße Abgasbehandlungsvorrichtung,
- Fig. 2:: ein Kraftfahrzeug aufweisend eine erfindungsgemäße Abgasbehandlungsvorrichtung; und
- Fig. 3: eine besondere Ausgestaltung einer porösen Lage für eine erfindungsgemäße Abgasbehandlungskomponente.

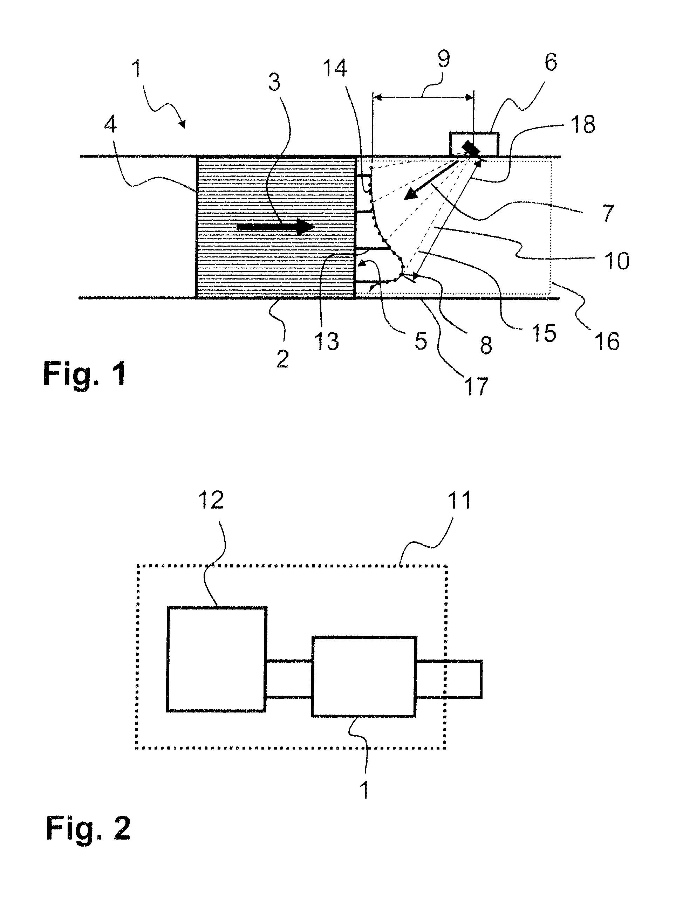

In Fig. 1 ist eine erfindungsgemäße Abgasbehandlungsvorrichtung 1 dargestellt. Die erfindungsgemäße Abgasbehandlungsvorrichtung 1 weist eine Abgasbehandlungskomponente 2 auf, die von einer Anströmseite 4 zu einer Abströmseite 5 mit einer Strömungsrichtung 3 für einen Abgasstrom durchströmbar ist. In Strömungsrichtung 3 hinter der Abströmseite 5 ist eine Zugabevorrichtung 6 mit einem Abstand 9 zur Abströmseite 5 vorgesehen. An der Abströmseite 5 ist eine poröse Lage 8 vorgesehen. Die Zugabevorrichtung 6 führt der Abgasbehandlungsvorrichtung 1 Reduktionsmittel 10 mit einer Zugaberichtung 7 zu, welche zumindest teilweise entgegengesetzt zur Strömungsrichtung 3 verläuft. Dabei kann die Zugabevorrichtung 6 selbst zur Strömungsrichtung 3 geneigt angeordnet sein, es ist aber z. B. auch möglich, dass die Zugabevorrichtung 6 senkrecht an der Abgas führenden Leitung angeordnet ist und integrierte Strömungsablenkungsmittel hat, die eine schräge Zugaberichtung 7 verwirklichen (z. B. mit einem Winkel zur Erstreckungsachse der Zugabevorrichtung von mindestens 10 oder sogar mindestens 15°).

Die poröse Lage 8 ist mit einer Stützkonstruktion 13 an der Abströmseite 5 der Abgasbehandlungskomponente 2 abgestützt. Die poröse Lage 8 weist eine Form 14 auf, die an ein Sprühbild 15 der Zugabevorrichtung 6 angepasst ist. Die Zugabevorrichtung 6 ist aus dem Bereich der Abgasbehandlungsvorrichtung 1, in welchem die Abgasströmung hauptsächlich strömt, teilweise hervorstehend ausgebildet. Insbesondere ist die Zugabevorrichtung 6 außerhalb eines gedachten Zylinders 16 angeordnet, welcher sich, ausgehend von der Abströmseite 5 der Abgasbehandlungskomponente 2, in Strömungsrichtung 3 erstreckt. Hierdurch kann ein zusätzlicher Strömungswiderstand durch die Zugabevorrichtung 6 vermieden werden. Die Form 14 ist derart an das Sprühbild 15 der Zugabevorrichtung 6 angepasst, dass eine Wegstrecke 18 von der Zugabevorrichtung 6 zu einer beliebigen Stelle der porösen Lage 8 im Wesentlichen konstant ist. Die poröse Lage 8 schneidet einen sich ausgehend von der Zugabevorrichtung 6 erstreckenden Kegel vorzugsweise mit einem im Wesentlichen konstanten Abstand zur Zugabevorrichtung 6.

Von der Zugabevorrichtung zugeführtes Reduktionsmittel 10 trifft vorzugsweise nicht auf das Außenrohr 17 (bzw. die Außenwand) der Abgasbehandlungsvorrichtung 1 (bzw. Abgasleitung), damit keine Kondensation des Reduktionsmittels 10 an dem Außenrohr 17 auftritt. Das Außenrohr 17 ist während des Betriebes aufgrund der Außentemperatur verhältnismäßig kühl.

Fig. 2 zeigt ein Kraftfahrzeug 11 aufweisend eine Verbrennungskraftmaschine 12 und eine erfindungsgemäße Abgasbehandlungsvorrichtung 1, welche zur Reinigung der Abgase der Verbrennungskraftmaschine 12 eingerichtet ist.

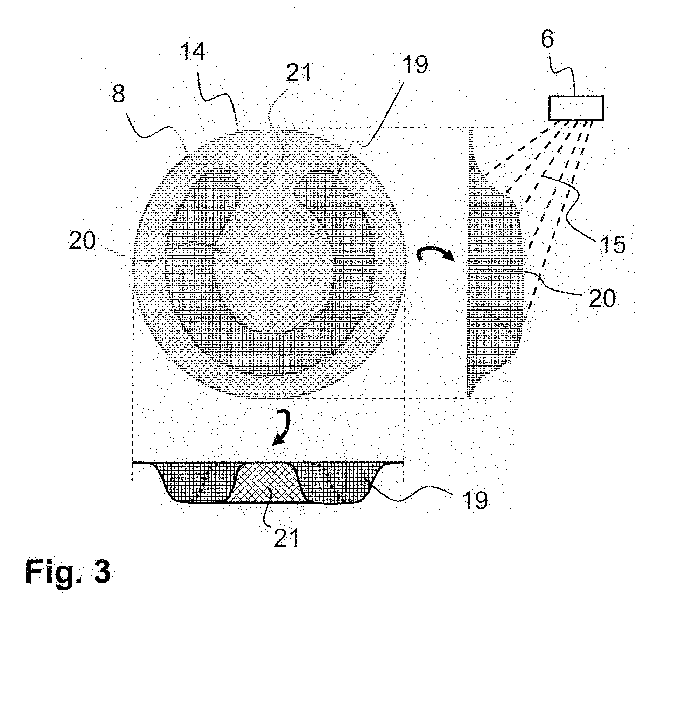

Fig. 3 zeigt eine besondere Ausgestaltung einer porösen Lage 8 für eine erfindungsgemäße Abgasbehandlungskomponente. Die poröse Lage 8 ist hier in drei verschiedenen Ansichten dargestellt, die jeweils entsprechend der zwischen den Ansichten dargestellten Pfeile umgeklappt sind. Die poröse Lage 8 weist eine umlaufende Erhöhung 19 auf, die eine Vertiefung 20 umgibt und an einer Stelle einen Durchbruch 21 hat. Der Durchbruch 21 ist vorzugsweise so angeordnet, dass er einer Zugabevorrichtung 6 für Reduktionsmittel am nächsten angeordnet ist. Die Form 14 der porösen Lage 8 ist somit an ein Sprühbild 15 der Zugabevorrichtung 6 angepasst. Die Erhöhung 19 umschließt im Wesentlichen das Sprühbild 15 der Zugabevorrichtung 6 bzw. den Auftreffbereich des Reduktionsmittels auf der porösen Lage 8.

### Bezugszeichenliste

- 1: Abgasbehandlungsvorrichtung
- 2: Abgasbehandlungskomponente
- 3: Strömungsrichtung
- 4: Anströmseite
- 5: Abströmseite
- 6: Zugabevorrichtung
- 7: Zugaberichtung
- 8: poröse Lage
- 9: Abstand
- 10: Reduktionsmittel
- 11: Kraftfahrzeug
- 12: Verbrennungskraftmaschine
- 13: Stützkonstruktion
- 14: Form
- 15: Sprühbild
- 16: gedachter Zylinder
- 17: Außenrohr
- 18: Wegstrecke
- 19: Erhöhung
- 20: Vertiefung
- 21: Durchbruch

## Patentansprüche

1. Abgasbehandlungsvorrichtung (1) aufweisend eine Abgasbehandlungskomponente (2), die mit einer Strömungsrichtung (3) von einer Anströmseite (4) zu einer Abströmseite (5) durchströmbar ist, wobei in Strömungsrichtung (3) hinter der Abströmseite (5) eine Zugabevorrichtung (6) für Reduktionsmittel in die Abgasbehandlungsvorrichtung (1) vorgesehen ist, wobei die Zugabevorrichtung (6) eine Zugaberichtung (7) aufweist, die zumindest teilweise entgegengesetzt zur Strömungsrichtung (3) verläuft, **dadurch gekennzeichnet, dass** die Abströmseite (5) der Abgasbehandlungskomponente (2) zumindest teilweise von einer porösen Lage (8) überspannt ist und zwischen der Zugabevorrichtung (6) und der Abgasbehandlungskomponente (2) ein Abstand (9) vorliegt, der derart gewählt ist, dass eingedüstes Reduktionsmittel (10) die poröse Lage (8) erreicht, wobei die poröse Lage (8) ein metallisches Gewebe oder ein metallisches Vlies umfasst.

2. Abgasbehandlungsvorrichtung (1) nach Patentanspruch 1, wobei die poröse Lage (8) zumindest teilweise parallel zur Abströmseite (5) angeordnet ist.

3. Abgasbehandlunasvorrichtung (1) nach Patentanspruch 2, wobei die poröse Lage (8) in einem laminaren Strömungsbereich hinter der Abströmseite (5) platziert ist.

4. Abgasbehandlungsvorrichtung (1) nach einem der vorhergehenden Patentansprüche, wobei die poröse Lage (8) mit einer Stützkonstruktion (13) an der Abgasbehandlungskomponente (2) abgestützt ist.

5. Abgasbehandlungsvorrichtung (1) nach einem der vorhergehenden Patentansprüche, wobei die poröse Lage (8) eine von einer Ebene abweichende Form (14) aufweist, die an ein Sprühbild (15) der Zugabevorrichtung (6) für Reduktionsmittel angepasst ist.

6. Abgasbehandlungsvorrichtung (1) nach Patentanspruch 5, wobei die Form (14) der porösen Lage (8) wenigstens eine Vertiefung (20) hin zur Abgasbehandlungskomponente (2) bildet.

7. Abgasbehandlungsvorrichtung (1) nach einem der vorhergehenden Patentansprüche, wobei die poröse Lage (8) zumindest teilweise aus Titandraht gefertigt ist.

8. Abgasbehandlungsvorrichtung (1) nach einem der vorhergehenden Patentansprüche, wobei die Abströmseite (5) von der porösen Lage (8) vollständig überspannt ist.

9. Abgasbehandlungsvorrichtung (1) nach einem der vorhergehenden Patentansprüche, wobei der Abstand (9) kleiner als 50 mm ist, so dass das Reduktionsmittel in einen laminaren Strömungsbereich des Abgases hinter dem Austritt aus der Abgasbehandlungskomponente (2) zugegeben werden kann.

10. Kraftfahrzeug (11), aufweisend eine Verbrennungskraftmaschine (12) und eine Abgasbehandlungsvorrichtung (1) nach einem der vorhergehenden Patentansprüche zur Reinigung der Abgase der Verbrennungskraftmaschine (12).

## Claims

1. An exhaust gas treatment device (1) comprising an exhaust gas treatment component (2) through which flow can pass in a flow direction (3) from an inflow side (4) to an outflow side (5), wherein downstream of the outflow side (5) in the flow direction (3) is provided a metering device (6) for metering reducing agent into the exhaust gas treatment device (1), wherein the metering device (6) has a metering direction (7) which runs at least partly counter to the flow direction (3), **characterized in that** the outflow side (5) of the exhaust gas treatment component (2) is spanned at least partially by a porous layer (8) and between the metering device (6) and the exhaust gas treatment component (2) there is a spacing (9) selected such that injected reducing agent (10) reaches the porous layer (8), wherein the porous layer (8) comprises a metal fabric or a metal fleece.

2. The exhaust gas treatment device (1) as claimed in claim 1, wherein the porous layer (8) is arranged at least partly parallel to the outflow side (5).

3. The exhaust gas treatment device (1) as claimed in claim 2, wherein the porous layer (8) is placed in a laminar flow region downstream of the outflow side (5).

4. The exhaust gas treatment device (1) as claimed in any of the preceding claims, wherein the porous layer (8) is supported with a supporting structure (13) on the exhaust gas treatment component (2).

5. The exhaust gas treatment device (1) as claimed in any of the preceding claims, wherein the porous layer (8) has a form (14) deviating from a plane and adapted to a spray pattern (15) of the metering device (6) for reducing agent.

6. The exhaust gas treatment device (1) as claimed in claim 5, wherein the form (14) of the porous layer (8) forms at least one depression (20) towards the exhaust gas treatment component (2).

7. The exhaust gas treatment device (1) as claimed in any of the preceding claims, wherein the porous layer (8) is made at least partly of titanium wire.

8. The exhaust gas treatment device (1) as claimed in any of the preceding claims, wherein the outflow side (5) is completely spanned or covered by the porous layer (8).

9. The exhaust gas treatment device (1) as claimed in any of the preceding claims, wherein the spacing (9) is less than 50 mm so that the reducing agent can be metered into a laminar flow region of the exhaust gas after emergence from the exhaust gas cleaning component (2).

10. A motor vehicle (11) comprising an internal combustion engine (12) and an exhaust gas treatment device (1) as claimed in any of the preceding claims to clean the exhaust gases from the internal combustion engine (12).

## Revendications

1. Dispositif de traitement de gaz d'échappement (1) comprenant un composant de traitement de gaz d'échappement (2) qui peut être traversé dans un sens d'écoulement (3) à partir d'un côté d'entrée d'écoulement (4) jusqu'à un côté de sortie d'écoulement (5), un dispositif d'addition (6) d'agent réducteur dans le dispositif de traitement de gaz d'échappement (1) étant prévu derrière le côté de sortie d'écoulement (5) dans le sens d'écoulement (3), le dispositif d'addition (6) présentant un sens d'addition (7) qui s'étend au moins partiellement en sens inverse au sens d'écoulement (3), **caractérisé en ce que** le côté de sortie d'écoulement (5) du composant de traitement de gaz d'échappement (2) est recouvert au moins partiellement par une couche poreuse (8) et une distance (9) existe entre le dispositif d'addition (6) et le composant de traitement de gaz d'échappement (2), laquelle distance est sélectionnée de telle sorte qu'un agent réducteur injecté (10) atteigne la couche poreuse (8), la couche poreuse (8) comportant un tissu métallique ou un non-tissé métallique.

2. Dispositif de traitement de gaz d'échappement (1) selon la revendication 1, dans lequel la couche poreuse (8) est disposée au moins partiellement parallèlement au côté de sortie d'écoulement (5).

3. Dispositif de traitement de gaz d'échappement (1) selon la revendication 2, dans lequel la couche poreuse (8) est placée dans une région d'écoulement laminaire derrière le côté de sortie d'écoulement (5).

4. Dispositif de traitement de gaz d'échappement (1) selon l'une quelconque des revendications précédentes, dans lequel la couche poreuse (8) est supportée sur le composant de traitement de gaz d'échappement (2) par une structure de support (13).

5. Dispositif de traitement de gaz d'échappement (1) selon l'une quelconque des revendications précédentes, dans lequel la couche poreuse (8) présente une forme (14) différant d'un plan, laquelle forme est adaptée à un motif de pulvérisation (15) du dispositif d'addition (6) d'agent réducteur.

6. Dispositif de traitement de gaz d'échappement (1) selon la revendication 5, dans lequel la forme (14) de la couche poreuse (8) forme au moins un renfoncement (20) en direction du composant de traitement de gaz d'échappement (2).

7. Dispositif de traitement de gaz d'échappement (1) selon l'une quelconque des revendications précédentes, dans lequel la couche poreuse (8) est fabriquée au moins partiellement en fil de titane.

8. Dispositif de traitement de gaz d'échappement (1) selon l'une quelconque des revendications précédentes, dans lequel le côté de sortie d'écoulement (5) est recouvert complètement par la couche poreuse (8).

9. Dispositif de traitement de gaz d'échappement (1) selon l'une quelconque des revendications précédentes, dans lequel la distance (9) est inférieure à 50 mm, de telle sorte que l'agent réducteur puisse être ajouté dans une région d'écoulement laminaire du gaz d'échappement derrière la sortie hors du composant de traitement de gaz d'échappement (2).

10. Véhicule automobile (11), comprenant un moteur à combustion interne (12) et un dispositif de traitement de gaz d'échappement (1) selon l'une quelconque des revendications précédentes pour l'épuration des gaz d'échappement du moteur à combustion interne (12).
